# EUROPÄISCHE PATENTSCHRIFT

(11) **EP 2 834 127 B1**
(45) Veröffentlichungstag und Bekanntmachung des Hinweises auf die Patenterteilung: **06.07.2016**
(21) Anmeldenummer: 12714997.9
(22) Anmeldetag: 02.04.2012
(51) Int. Cl.: B62B 9/08, B60T 7/10

(54) **BETÄTIGUNGSEINHEIT FÜR EINE KINDERWAGEN-BREMSVORRICHTUNG**
ACTUATION UNIT FOR A STROLLER BRAKING DEVICE
UNITE DE COMMANDE DESTINÉE À UN DISPOSITIF DE FREINAGE D'UN LANDAU

(43) Veröffentlichungstag der Anmeldung: 11.02.2015
(73) Patentinhaber: ABC Design GmbH, 79774 Albbruck (DE)
(72) Erfinder: FISCHER, Bernd, 79774 Albbruck (DE)
(74) Vertreter: dompatent von Kreisler Selting Werner - Partnerschaft von Patent- und Rechtsanwälten mbB
(86) Internationale Anmeldenummer: PCT/EP2012/055964
(87) Internationale Veröffentlichungsnummer: WO 2013/149642

(56) Entgegenhaltungen:
- DE-U1- 20 017 929
- DE-U1- 29 712 230
- DE-U1-202007 001 112
- US-A1- 2011 089 665

## Beschreibung

Die Erfindung betrifft eine Betätigungseinheit für eine Kinderwagen-Bremsvorrichtung gemäß dem Oberbegriff von Anspruch 1, wie z. B. aus DE-U-297 12 230 grundsätzlich bekannt.

Im Stand der Technik ist es bekannt, Kinderwagen nicht nur mit einer Feststellbremse sondern auch mit einer über eine Betätigungseinheit manuell betätigbaren Bremsvorrichtung auszustatten, um den Kinderwagen z.B. auf abschüssigem Gelände abbremsen zu können. Während für die Abbremsung des Kinderwagens am Kinderwagen im Regelfall ein Betätigungsgriff wie bei einer Fahrrad-Handbremse angeordnet ist, werden die Feststellbremsen im Allgemeinen über Fußpedale o.dgl. betätigt.

Bremsen-Betätigungseinheiten für verfahrbare Gestelle sind unter anderem aus DE-U-20 2007 001 112, US-A-2011/089665 und DE-U-200 17 929 bekannt.

Aufgabe der Erfindung ist es, die Betätigung einer Kinderwagen-Bremsvorrichtung zum Abbremsen und zum Feststellen sowohl konstruktiv als auch von der Handhabung her zu vereinfachen.

Zur Lösung dieser Aufgabe wird mit der Erfindung eine Betätigungseinheit für eine Kinderwagen-Bremsvorrichtung vorgeschlagen, die versehen ist mit den Merkmalen des Anspruchs 1. Einzelne Ausgestaltungen der Erfindung sind Gegenstand der Unteransprüche.

Die erfindungsgemäße Betätigungseinheit für eine Kinderwagen-Bremsvorrichtung zeichnet durch einen kompakten Aufbau aus. Der in dem Gehäuse gelagerte Betätigungsgriff weist ein Lagerteil und einen von diesem abstehenden Betätigungshebel auf. Das Lagerteil ist um die Schwenkachse schwenkbar in dem Gehäuse gelagert. Koaxial zur Schwenkachse verläuft ein Lagerzapfen, an dem axial beweglich ein Löseknopf gelagert ist. Das Lagerteil des Betätigungsgriffs ist kinematisch mit der Kinderwagen-Bremsvorrichtung gekoppelt, steht also mit dieser in Wirkverbindung. Dazu dient ein Kopplungselement, bei dem es sich im Regenfall um einen Bowdenzug handelt.

Der Betätigungsgriff lässt sich ausgehend von einer Mittelstellung in zwei entgegengesetzte Richtungen verschwenken. Bei Verschwenkung des Betätigungsgriffs in die erste Richtung wird die Abbremsfunktion der Kinderwagen-Bremsvorrichtung genutzt. Beispielsweise erfolgt eine Verschwenkung in die erste Richtung dann, wenn der Betätigungsgriff bzw. sein Betätigungshebel mit den Fingern einer Hand, deren Daumen und Ballen die Kinderwagen-Schieberstange umfasst bzw. umgreift, in Richtung auf die Schieberstange bewegt wird. Durch manuelle Steuerung des Ausmaßes der Schwenkbewegung in der ersten Richtung lässt sich die von der Kinderwagen-Bremsvorrichtung erzeugte Bremskraft steuern (Abbremsfunktion).

Wird dagegen der Betätigungsgriff ausgehen von seiner Mittelstellung in die zweite Richtung verschwenkt, so wird wiederum auf die Kinderwagen-Bremsvorrichtung eingewirkt, jetzt aber zum Zwecke der Realisierung einer Feststellfunktion. Denn erfindungsgemäß wird der Betätigungsgriff bei Bewegung in die zweite Richtung arretiert, wenn der Betätigungsgriff seine zweite Schwenkposition erreicht hat. In dieser Schwenkposition wird die Kinderwagen-Bremsvorrichtung zur Ausübung beispielsweise ihrer Bremskraft aktiviert, was dann als Feststellbremse fungiert. Diese Bremskraft kann selbstverständlich auch manuell dann ausgeübt werden, wenn der Betätigungsgriff in die erste Richtung verschwenkt wird. Dabei allerdings entfällt die erfindungsgemäße Funktion der Arretierung des Betätigungsgriffs; diese ist lediglich gegeben, wenn der Betätigungsgriff in die zweite Richtung verschwenkt wird.

Zur Entriegelung des Betätigungsgriffs ist die erfindungsgemäße Betätigungseinheit mit einer lösbaren Arretiervorrichtung versehen. Diese lösbare Arretiervorrichtung weist einen Löseknopf auf, der in Wirkverbindung mit einem Arretiervorsprung steht. Der Arretiervorsprung wiederum taucht zur Arretierung des Betätigungsgriffs in eine korrespondierende Arretiervertiefung an beispielsweise dem Lagerteil des Betätigungsgriffs ein. Diese Eintauchbewegung wird unterstützt durch ein Vorspannelement, das den Arretiervorsprung in Richtung auf dem Betätigungsgriff zum selbsttätigen Eintauchen in die Arretiervertiefung vorspannt, wenn sich der Betätigungsgriff in seiner zweiten Schwenkposition befindet, in der die Arretierung automatisch stattfindet. In dieser Stellung des Betätigungsgriffs, also in der Arretierstellung bzw. der zweiten Schwenkposition, ragt der Löseknopf teilweise aus dem Gehäuse heraus (Ausrückposition). Er kann nun manuell niedergedrückt und damit in die Rückzugsposition überführt werden, in der der Arretiervorsprung nicht mehr in die Arretiervertiefung eintaucht. Hierbei kann vorgesehen sein, dass der Betätigungsgriff aus seiner zweiten Schwenkposition automatisch (oder manuell) in die Mittelposition überführt wird, wodurch wiederum die Kinderwagen-Bremsvorrichtung freigegeben wird.

Wie oben erwähnt, stehen der Löseknopf und der mindestens eine Arretiervorsprung miteinander in Wirkverbindung. Dies kann beispielsweise durch Hebel, Gestänge o. dgl. Kopplungselemente kinematisch erfolgen. Alternativ und bevorzugt ist aber vorgesehen, dass der Löseknopf und der mindestens eine Arretiervorsprung als einteiliges Bauteil ausgebildet sind.

Zur weiteren Erhöhung der Arretierfunktion und Blockierung des Betätigungsgriffs in seiner zweiten Schwenkposition ist es zweckmäßig, wenn die Arretiervorrichtung mindestens zwei Arretiervorsprünge und dementsprechend der Betätigungsgriff mindestens zwei Arretiervertiefungen aufweist, wobei jede Arretiervertiefung einem anderen Arretiervorsprung zugeordnet ist.

Wie bereits oben beschrieben, ist der Löseknopf axial verschiebbar zum Lagerzapfen und insbesondere an diesem gelagert. Der Löseknopf ist zweckmäßigerweise in Form einer einseitig geschlossenen Hülse ausgebildet, die sich durch den Lagerteil des Betätigungsgriffs erstreckt und letztendlich die körperliche Schwenkachse für den Betätigungsgriff bildet. Das geschlossene Ende der Hülse ragt in der Ausrückposition des Löseknopfs aus einem der beiden Teile des Gehäuses heraus. An dem dem geschlossenen Ende der Hülse abgewandten Ende des Löseknopfs befindet sich der mindestens eine Arretiervorsprung, der in Richtung auf das geschlossene Ende der Hülse, also nach oben weist. Der Arretiervorsprung liegt einer Seite des Lagerteils des Betätigungsgriffs gegenüber; in dieser Seite des Lagerteils befindet sich die mindestens eine Arretiervertiefung. Um sicher zu verhindern, dass der Löseknopf bzw. die Hülse mit dem Arretiervorsprung sich nicht mitdreht, wenn der Betätigungsgriff verschwenkt wird, ist es zweckmäßig, den Löseknopf gegen Verdrehungen gesichert und axial beweglich am Lagerzapfen anzuordnen. Dies kann durch Formschlusselemente wie beispielsweise durch eine Ausnehmung und einen in diesen hineinragenden Vorsprung am Löseknopf und im Gehäuse bzw. an einem der beiden Gehäuseteile erreicht werden.

Wie bereits oben erwähnt, kann es sich bei dem Kopplungselement beispielsweise um einen Bowdenzug handeln. Wenn dieser Bowdenzug durch Verschwenkung des Betätigungsgriffs betätigt und gespannt wird, wird im Allgemeinen eine ausreichend große Zugkraft auf dem Betätigungsgriff ausgeübt, damit sich dieser aus einer Verschwenkposition nach manuellem Lösen automatisch wieder in die Mittelstellung zurückbewegt. Diese Zurückbewegung wird zumeist auch durch Federelemente oder dergleichen der Kinderwagen-Bremsvorrichtung unterstützt, die auf Elemente einwirken (wie beispielsweise Hebel), an denen der Bowdenzug befestigt ist. Zur weiteren Gewährleistung der sicheren Zurückbewegung des Betätigungsgriffs in die Mittelstellung ist es zweckmäßig, wenn die Betätigungseinheit eine Betätigungsgriff-Rückholvorrichtung mit mindestens einem Rückholfederelement zum automatischen Zurückbewegen des Betätigungsgriffs in die Mittelstellung aufweist. Damit wird sichergestellt, dass beispielsweise auch bei einem defekten Kopplungselement (gerissene Seil- bzw. Bowdenzug) die Rückholfunktion für den Betätigungsgriff gewährleistet ist. Durch die Rückholvorrichtung wird darüber hinaus stets garantiert, dass auch bei verminderter Zugkraft des Bowdenzuges der Betätigungsgriff stets seine Mittelstellung einnimmt, wenn er gelöst wird.

Die Betätigungseinheit kann gemäß einem weiteren Aspekt der Erfindung auch eine im Wesentlichen U-förmige Schieberhohlstange umfassen, die innerhalb eines Umgreifbereichs von einem Umgreifabschnitt des Gehäuses umschlossen bzw. umgeben ist. Das Gehäuse ist also in dem Umgreifbereich mit der Schieberhohlstange verbunden. Innerhalb des Umgreifbereichs weist die Schieberhohlstange eine Öffnung auf, durch die hindurch das Kopplungselement verläuft. Durch die Öffnung in der Schieberhohlstange erstreckt sich also das Kopplungselement ausgehend von dem Gehäuse bzw. dem Betätigungsgriff und weiter durch die Schieberhohlstange hindurch bis zu einem Auslass, auf den hier nicht näher eingegangen werden muss.

Wie zuvor beschrieben, weist die Schieberhohlstange eine U-Form auf, ist also mit einem Basisschenkelabschnitt und zwei parallel zueinander verlaufenden und in die gleiche Richtung weisenden Seitenschenkelabschnitten versehen. Bei Kinderwagen-Schieberstangen ist es mitunter üblich, dass die Schieberstange gegenüber dem Kinderwagengestell wahlweise abgewinkelt werden kann. Dadurch ist eine Anpassung der Höhenposition der Schieberstange gegeben. Für die Abwinklung der Schieberhohlstange an deren seitlichen Abschnitten existieren Gelenke. Bei einer bevorzugten Ausgestaltung der Erfindung ist vorgesehen, dass das Kopplungselement sich auch durch die Gelenke bzw. auch durch mindestens eines dieser Gelenke erstreckt, also nicht etwa seitlich und außen an dem Gelenk herum geführt wird.

Bei der zuvor beschriebenen Ausgestaltung der Erfindung ist es ferner zweckmäßig, dass jedes Gelenk zwei hohle Gelenkhälften mit einer Gelenkachse, einem konzentrisch zu dieser angeordneten Sperreinheit, einem diese deaktivierenden Entriegelungselement und mit einer Vorspannfeder zur automatischen Aktivierung der Sperreinheit aufweist und dass jede Gelenkhälfte einen hohlen Verbindungsstutzen zur Verbindung mit einem Hohlstangenteil des Seitenabschnitts der Schieberhohlstange aufweist, wobei das Kopplungselement innerhalb der hohlen Gelenkhälften und außen um die Sperreinheit herum verläuft.

Bereits oben ist erwähnt, dass das Kopplungselement zweckmäßigerweise ein Bowdenzug ist. Ein derartiger Bowdenzug weist eine innere Seele und eine äußere Führungshülse für die Seele auf, wobei die Führungshülse druckfest sowie flexibel ist. Die beiden axialen Enden der Führungshülse sind einerseits am Gehäuse und andererseits an der Kinderwagen-Bremsvorrichtung gehalten.

Die Erfindung wird nachfolgend anhand eines Ausführungsbeispiels und unter Bezugnahme auf die Zeichnung näher erläutert. Im Einzelnen zeigen dabei:
- Fig. 1: perspektivisch eine Ansicht auf ein Kinderwagengestell (in diesem Fall ohne Sitzteil) mit einer Bremsvorrichtung gemäß einem Ausführungsbeispiel der Erfindung,
- Fig. 2: eine perspektivische Darstellung der Betätigungseinheit zur manuellen Betätigung der Kinderwagen-Bremsvorrichtung,
- Fig. 3: eine Ansicht auf den im Gehäuse der Betätigungseinheit gelagerten Betätigungsgriff der Betätigungseinheit, und zwar ohne das Gehäuseoberteil jedoch mit Darstellung der Bowdenzügen,
- Fig. 4: eine Explosionsdarstellung des Gehäuses der Betätigungseinheit zur Verdeutlichung der Verrastungsmöglichkeit des Betätigungsgriffs in der Feststellfunktion der Kinderwagen-Bremsvorrichtung,
- Fig. 5: eine Darstellung der Betätigungseinheit bei freigegebenem Betätigungsgriff,
- Fig. 6: eine Darstellung der Betätigungseinheit mit ausgerücktem Löseknopf in der Feststellfunktion,
- Fig. 7: eine Explosionsansicht eines der Gelenke der Schieberhohlstange zur Verdeutlichung des Aufbaus des Gelenks und
- Fign. 8 und 9: Schnittansichten durch ein Gelenk gemäß Fig. 7 zur Verdeutlichung der Bowdenzugführung durch dieses Gelenk.

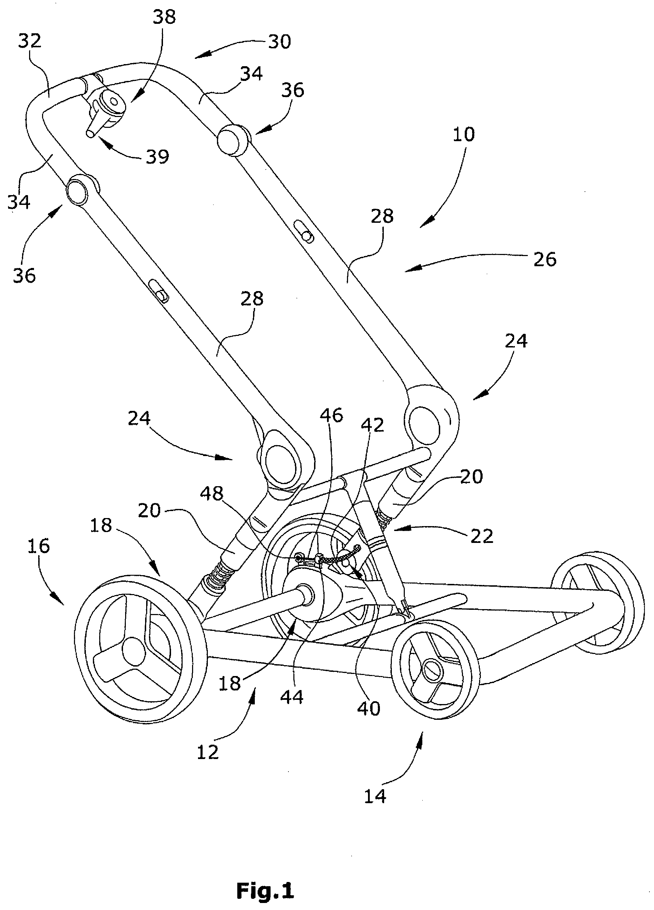

Fig. 1 zeigt in der Übersicht ein Kinderwagen-Gestell 10, das ein Untergestell 12 mit vorderen Rädern 14 und hinteren Rädern 16 aufweist. An den hinteren Rädern 16 befindet sich jeweils eine Kinderwagen-Bremsvorrichtung 18, die beispielsweise als Trommelbremse, Scheibenbremse o.dgl. Bremse ausgebildet ist. Das Untergestell 12 weist ferner Seiten- und Mittelstützstreben 20,22 auf, die an Gelenken 24 mit einem oberen Gestellteil 26 gelenkig verbunden sind. Das Kinderwagengestell 10 ist zusammenklappbar, was aber im Rahmen dieser Erfindung unbedeutend ist und daher hier nicht weiter beschrieben werden wird.

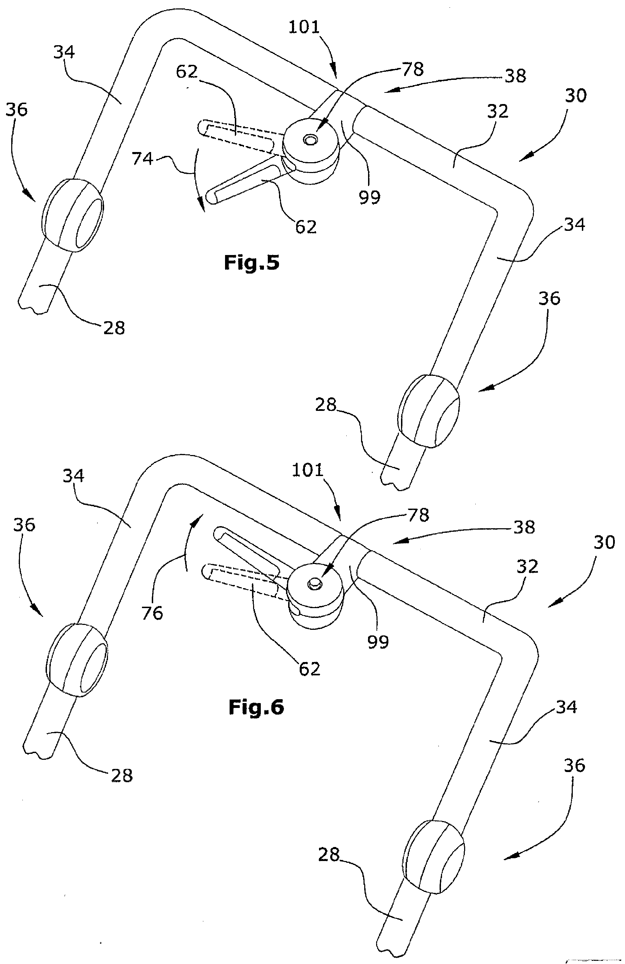

Das obere Gestellteil 26 weist Seitenrohre 28 und eine mit deren Enden verbundene Schieberhohlstange 30 auf, die einen mit den Händen greifbaren Basisschenkelabschnitt 32 sowie von diesem in die gleiche Richtung abstehende, parallel zueinander verlaufende Seitenschenkelabschnitte 34 aufweist, die über Drehgelenke 36 mit den Seitenrohren 28 verbunden sind. An dem Basisschenkelabschnitt 32 der Schieberhohlstange 30 befindet sich die Betätigungseinheit 38 der Kinderwagen-Bremsvorrichtungen 18. Die Betätigungseinheit 38 weist einen Betätigungsgriff 39 auf, der manuell in eine Abbremsposition (siehe Fig. 5) zur manuell vorgebbaren Abbremskraft und in eine Feststellposition (siehe Fig. 6) zur Realisierung einer Feststellfunktion der Kinderwagen-Bremsvorrichtungen 18 überführbar ist. Zu diesem Zweck ist die Betätigungseinheit 38 über zwei Bowdenzüge 40, die durch die Rohre des Gestells 10 und dessen Gelenke 24,36 hindurch bis zu den Bremsvorrichtungen 18 geführt sind, verbunden. An den Bremsvorrichtungen 18 enden die Bowdenzüge 40. Gemäß Fig. 1 liegt die flexible, druckfeste Führungshülse 42 jedes Bowdenzugs an einem Anschlag 44 an, während die Seele 46 jedes Bowdenzugs 40 an einem Hebel 48 der Bremsvorrichtung 18 angreift.

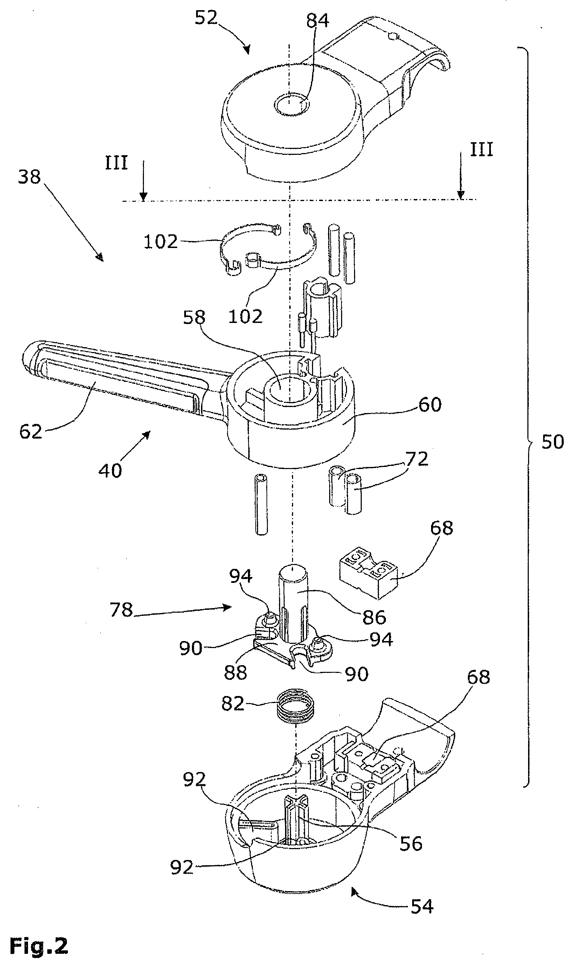

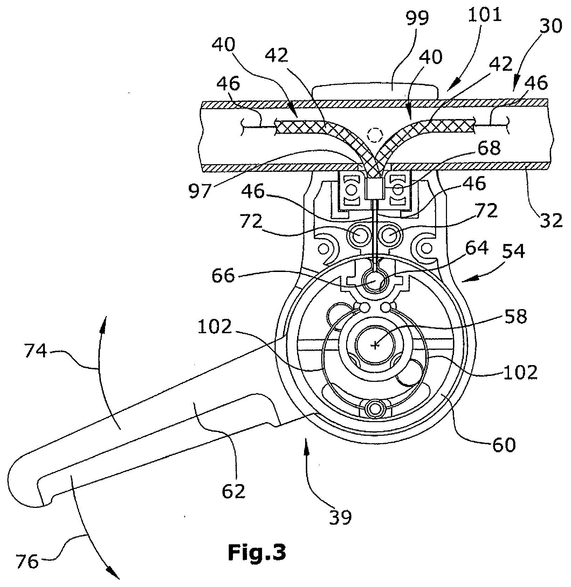

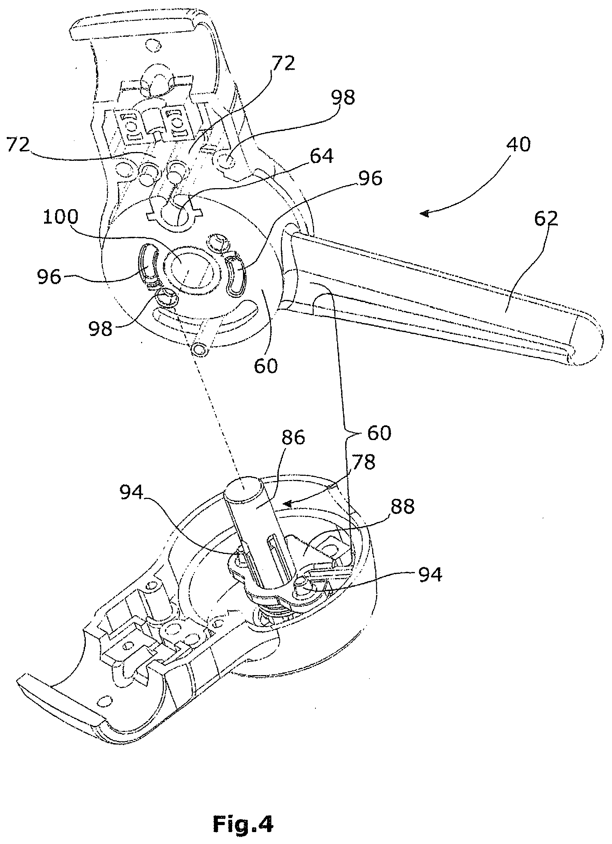

Der Aufbau der Betätigungseinheit 38 wird nachfolgend anhand der Fign. 2 bis 4 näher beschrieben. Die Betätigungseinheit 38 weist ein zweiteiliges Gehäuse 50 mit einem (oberen) Gehäuseoberteil 52 und einem (unteren) Gehäuseunterteil 54 auf. Zwischen beiden Gehäuseteilen 52,54 erstreckt sich ein Lagerzapfen 56, der eine Schwenkachse 58 für den Betätigungsgriff 39 definiert. Der Betätigungsgriff 39 weist ein in dem Gehäuse 50 angeordnetes Lagerteil 60 und einen von diesem abstehenden Betätigungshebel 62 auf. Fig. 3 zeigt die Draufsicht auf das Gehäuse 50 bei abgenommenem Gehäuseoberteil 52. Zu erkennen ist, dass im Lagerteil 60 eine Aufnahme 64 für die üblicherweise an Bowdenzug-Seelen angeordneten Blöcke 66 ausgebildet ist. Die Blöcke 66 beider jeweils zu einer Kinderwagen-Bremsvorrichtung 18 führenden Seelen sind in der Aufnahme 64 angeordnet. Von dort aus erstrecken sich beide Bowdenzüge (in der Darstellung gemäß Fig. 4 an sich hintereinander anliegend, aus Gründen der besseren Erkennbarkeit, dass es sich um zwei Bowdenzüge handelt, jedoch nebeneinander liegend gezeichnet) bis zu Lagerblöcken 68, die jeweils eine Aufnahme 70 für jeweils ein Ende der beiden flexiblen, druckfesten Führungshülsen 42 aufweist. Beidseitig der beiden Bowdenzug-Seelen 46 befinden sich Umlenkrollen 72. Anhand von Fig. 3 ist zu erkennen, dass dann, wenn der Betätigungshebel 62 in eine der beiden entgegengesetzten Verschwenkrichtungen 74,76 verschwenkt wird, an den Seelen 46 der beiden Bowdenzüge 40 gezogen wird. Dadurch werden dann die Hebel 48 der beiden Bremsvorrichtungen 18 betätigt und die Bremsen üben ihre Funktion, nämlich eine Abbremsung bzw. eine Feststellbremsung aus.

Bezugnehmend auf die Fign. 2 und 4 wird nachfolgend die Konstruktion und Funktionsweise der manuellen Betätigungseinheit 38 erläutert. Wie zu erkennen ist, ist auf dem Lagerzapfen 56 ein Löseknopf 78 einer Arretiervorrichtung 80 gelagert. Mithilfe einer Schraubendruckfeder 82 ist dieser Löseknopf 78 in Richtung auf das Gehäuseoberteil 52 vorgespannt. Zentrisch in dem Gehäuseoberteil 52 befindet sich eine Öffnung 84, in der der Löseknopf 78 bündig mit der Außenseite des Gehäuseoberteils 52 abschließt, wenn die Arretiervorrichtung 80 gelöst ist. Der Löseknopf 78 weist einen hülsenförmigen Vorsprung 86 auf, der von einer Platte 88 absteht. Die Platte 88 weist Formschluss-Aussparungen 90 auf, die mit Vorsprüngen 92 im Gehäuseunterteil 54 zusammenwirken. Durch diese Vorsprünge 92 ist der Löseknopf 78 axial auf dem Lagerzapfen 56 verschiebbar gelagert und verdrehsicher angeordnet. Von der Platte 88 ragen in diesem Ausführungsbeispiel zwei Arretiervorsprünge 94 auf, die je nach Verschwenkstellung des Betätigungsgriffs 39 in Führungsnuten 96 oder in Arretiervertiefungen 98 an der Unterseite des Lagerteils 60 des Betätigungsgriffs 39 eingetaucht sind. Das Lagerteil 60 des Betätigungsgriffs 39 weist eine zentrische Bohrung 100 zur Aufnahme des Hülsenteils bzw. Vorsprungs 86 auf, der letztendlich die körperliche Schwenkachse des Betätigungsgriffs 39 bildet.

In den Fign. 2 bis 4 ist der Betätigungshebel 62 in seiner Mittelstellung gezeigt. In dieser Mittelstellung befinden sich die Arretiervorsprünge 94 in den Führungsnuten 96 des Lagerteils 60 des Betätigungsgriffs 39. Bei manueller Verschwenkung des Betätigungshebels 62 in Richtung des Pfeils 74 (siehe auch Fig. 5) dreht sich das Lagerteil 60 relativ zu den Arretiervorsprüngen 94, die weiterhin in den Führungsnuten 96 verbleiben. Die Führungsnuten 96 sorgen in Verbindung mit den Arretiervorsprüngen 94 für eine Stabilisierung der Schwenkbewegung; eine Arretierung ist nicht vorgesehen. Für die Erfindung ist es nicht zwingend erforderlich, dass die Arretiervorsprünge 94 bei dieser Verschwenkung des Betätigungshebels 62 in den Führungsnuten 96 eingetaucht sind. Auf diese Führungsnuten 96 kann auch verzichtet werden.

Entscheidender ist, dass die Arretiervorsprünge 94 dann, wenn der Betätigungshebel 62 in Richtung des Pfeils 76 (siehe Fig. 3) verschwenkt wird, in die Arretiervertiefungen 98 eintauchen können. Dann ist der Betätigungshebel 62 festgestellt (siehe auch Fig. 6) und die Bremsvorrichtungen 18 befinden sich in ihren Stellungen zur Ausübung der Feststellfunktion. Der Löseknopf 78 ist infolge der axialen Bewegung bei in die Arretiervertiefungen 98 eingetauchten Arretiervorsprünge 94 aus der Öffnung 84 des Gehäuseoberteils 52 herausbewegt (siehe auch Fig. 6). Durch Drücken des Löseknopfs 78 lässt sich der Betätigungshebel 62 wieder in die Mittelstellung überführen bzw. bewegt sich in diese automatisch zurück.

Wie ferner anhand der Fign. 2 bis 4 gezeigt ist, weist die Betätigungseinheit 38 eine Betätigungsgriff-Rückholvorrichtung in Form zweier Federn 102 auf, die, wie man sich bei aus der Mittelstellung verschenktem Betätigungsgriff 39 gemäß Fign. 5 oder 6 vorstellen kann, verbogen sind und damit eine Rückholkraft erzeugen, die den Betätigungsgriff 39 automatisch in die Mittelstellung zurückführt.

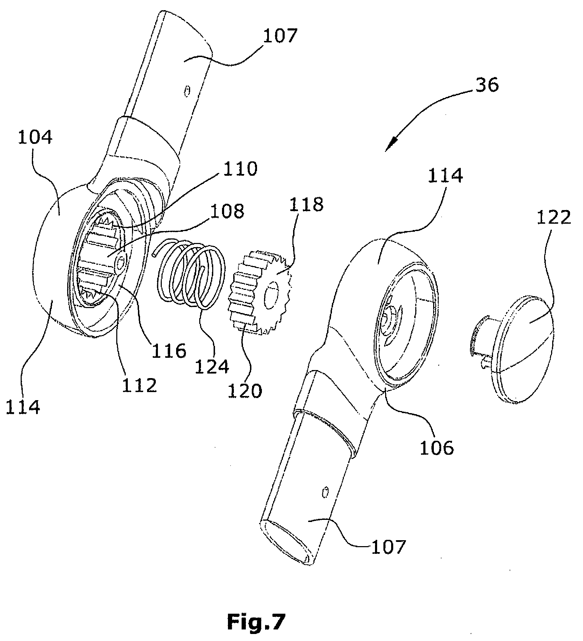

Anhand der Fign. 7 bis 9 soll noch kurz erläutert werden, wie die Bowdenzüge 40 durch die Gelenke 36 hindurchgeführt sind. Die Bowdenzüge 40 erstrecken sich ausgehend von dem Gehäuse 50 durch eine Durchführungsöffnung 97 in dem Basisschenkelabschnitt 32 der Schieberhohlstange 30 durch diese, wobei jeweils einer der Bowdenzüge 40 sich weiter bis zu einem Drehgelenk 36 an den Seitenschenkelabschnitten 34 erstreckt. Im Bereich der Durchführungsöffnung 97 umschließen Umgreifabschnitte 99 der Gehäuseober- und -unterteile 52,54 die Schieberhohlstange 30 innerhalb eines Umgreifbereichs 101.

Jedes Gelenk 36 weist gemäß Fig. 7 ein erstes Gelenkteil 104 sowie ein zweites Gelenkteil 106 auf. Beide Gelenkteile 104,106 weisen einen Verbindungsstutzen 107 auf und sind um die Gelenkachse 108 gegeneinander verschwenkbar. Jedes Gelenkteil 104,106 weist einen innenliegenden Kragen 110 mit einer Innen-(Riefen-)Verzahnung 112 auf. Die Krägen 110 sind im Durchmesser kleiner als die Außenabmessungen der Gelenkteile 104, so dass sich zwischen den im Wesentlichen konzentrisch zur Gelenkachse 108 angeordneten Gehäuseteilen 114 der beiden Gelenkteile 104,106 ein Freiraum 116 ergibt.

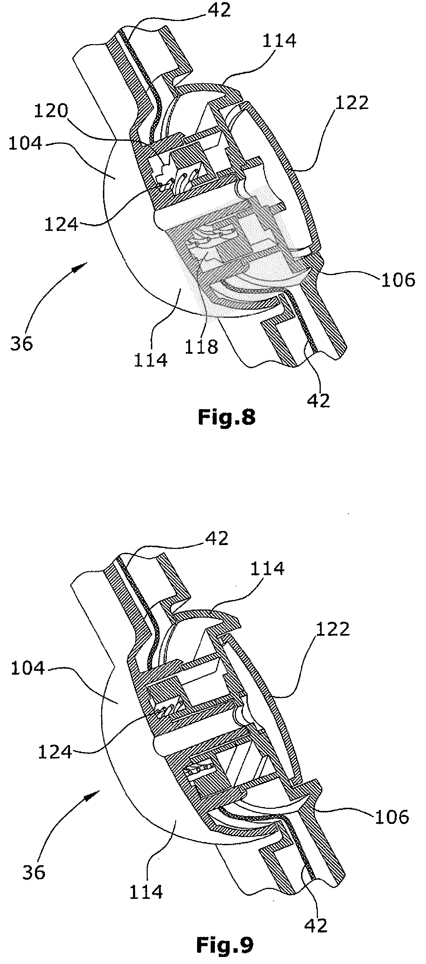

Auf der Gelenkachse 108 ist ein Sperrelement 118 mit Außenverzahnung 120 verschiebbar angeordnet, das mit den Innenverzahnungen 112 der beiden Krägen 110 zusammenwirkt, um die beiden Gelenkteile 104,106 gegeneinander zu sperren. Eines der beiden Gelenkteile 106 weist einen Löseknopf als Entriegelungselement 122 auf, das das Sperrelement 118 gegen die Kraft einer Schraubendruckfeder 124 zurückbewegt, so dass das Sperrelement 118 lediglich noch in einem der beiden Krägen 110, nämlich in dem Kragen 110 des anderen Gelenkteils 104 eingetaucht ist. Damit ist das das Entriegelungselement 122 aufweisende Gelenkteil 106 frei beweglich (siehe Fig. 9). Die Krägen 110 mit ihren Innenverzahnungen 112, das Sperrelement 118 mit seiner Außenverzahnung 120 und die Schraubendruckfeder bilden eine Sperreinheit zum wahlweisen Sperren der Verdrehung des Gelenks 36.

Der Bowdenzug 40 ist nun, wie in den Fign. 8 und 9 gezeigt, um die beiden Krägen 110 herum durch das Gelenk 36 hindurch geführt.

## Patentansprüche

1. Betätigungseinheit für eine Kinderwagen-Bremsvorrichtung, mit
- einem Gehäuse (50), das ein Gehäuseoberteil (52) und ein Gehäuseunterteil (54) aufweist,
- einem zwischen dem Gehäuseoberteil (52) und dem Gehäuseunterteil (54) angeordneten Betätigungsgriff (39), der in dem Gehäuse (50) um eine Schwenkachse schwenkbar gelagert ist und der eine Aufnahme aufweist, an der ein Kopplungselement zur Wirkverbindung des Betätigungsgriffs (39) mit der Kinderwagen-Bremsvorrichtung befestigbar ist,
- wobei der Betätigungsgriff (39), ausgehend von einer Mittelstellung, zur Erzeugung einer Abbremsfunktion der Kinderwagen-Bremsvorrichtung in eine erste Richtung (74) bis in eine erste Schwenkposition schwenkbar ist und, ebenfalls ausgehend von der Mittelstellung, zur Erzeugung einer Feststellfunktion der Kinderwagen-Bremsvorrichtung in eine zur ersten Richtung entgegengesetzte zweite Richtung (76) bis in eine zweite Schwenkposition schwenkbar ist, und
- einer lösbaren Arretiervorrichtung (80) zur automatischen Arretierung des Betätigungsgriffs (39) in der zweiten Schwenkposition,
**dadurch gekennzeichnet,**
- **dass** die Arretiervorrichtung (80) einen Löseknopf (78), der axial verschiebbar auf einem zur Schwenkachse koaxialen Zapfen (56) angeordnet ist, und mindestens einen mit dem Löseknopf (78) gekoppelten Arretiervorsprung (94) zum Eintauchen in eine korrespondierende Arretiervertiefung (98) des Betätigungsgriffs (39) aufweist,
- **dass** die Arretiervorrichtung (80) versehen ist mit einem Vorspannelement (82) zur Ausübung einer Vorspannkraft auf den Arretiervorsprung (94) in Richtung auf den Betätigungsgriff (39) zum selbsttätigen Eintauchen des Arretiervorsprungs (94) in die Arretiervertiefung (98), wenn sich der Betätigungsgriff (39) in seiner zweiten Schwenkposition befindet, und
- **dass** der Löseknopf (78) in der zweiten Schwenkposition des Betätigungsgriffs (39) und damit bei in die Arretiervertiefung (98) eingetauchtem Arretiervorsprung (94) eine Ausrückposition einnimmt, in der der Löseknopf (78) teilweise aus dem Gehäuse (50) herausragt, und zur Entriegelung der Arretiervorrichtung (80) manuell gegen die Vorspannkraft in das Gehäuse (50) bis in eine Rückzugsposition zurückbewegbar ist und in anderen Schwenkpositionen des Betätigungsgriffs (39) in der Rückzugsposition verbleibt.

2. Betätigungseinheit nach Anspruch 1, **dadurch gekennzeichnet, dass** der Löseknopf (78) und der mindestens einer Arretiervorsprung (94) einteilig ausgebildet sind.

3. Betätigungseinheit nach Anspruch 2, **dadurch gekennzeichnet, dass** die Arretiervorrichtung (80) mindestens zwei Arretiervorsprünge (94) und der Betätigungsgriff (39) mindestens zwei diesen Arretiervorsprüngen (94) jeweils zugeordnete Arretiervertiefungen (98) aufweist.

4. Betätigungseinheit nach einem der Ansprüche 1 bis 3, **gekennzeichnet durch** eine Betätigungsgriff-Rückholvorrichtung (102) mit mindestens einem Rückholfederelement zum automatischen Zurückbewegen des Betätigungsgriffs (39) in die Mittelstellung.

5. Betätigungseinheit nach einem der Ansprüche 1 bis 4, **dadurch gekennzeichnet, dass** das Gehäuse (50) einen Umgreifabschnitt (99) aufweist und dass eine im Wesentlichen U-förmige Schieberhohlstange (30) vorgesehen ist, die in einem Umgreifbereich (101) von dem Gehäuse (50) und dessen Umgreifabschnitt (99) umschlossen und/oder umgeben ist und innerhalb des Umgreifbereichs (101) eine Öffnung (97) zur Durchführung des den Betätigungsgriff (39) mit der Kinderwagen-Bremsvorrichtung in Wirkverbindung versetzenden Kopplungselements aufweist.

6. Betätigungseinheit nach Anspruch 5, **dadurch gekennzeichnet, dass** die im Wesentlichen U-förmige Schieberhohlstange (30) einen Basisschenkelabschnitt (32) und zwei im Wesentlichen parallel verlaufende, in die gleiche Richtung weisende Seitenschenkelabschnitte (34) mit jeweils einem Gelenk (36) zum Abwinkeln der Enden der Seitenschenkelabschnitte (34) aufweist und dass sich das Kopplungselement durch mindestens einen der Seitenschenkelabschnitte (34) und dessen Gelenk (36) hindurch erstreckt.

7. Betätigungseinheit nach Anspruch 6, **dadurch gekennzeichnet, dass** jedes Gelenk (36) zwei hohle Gelenkteile (104,106) mit einer Gelenkachse (108), einer konzentrisch zu dieser angeordneten Sperreinheit (110,112,118), einem diese deaktivierendem Entriegelungselement (122) und mit einer Vorspannfeder (124) zur automatischen Aktivierung der Sperreinheit (110,112,118) aufweist und dass jedes Gelenkteil (104,106) einen hohlen Verbindungsstutzen (107) zur Verbindung mit einem Hohlstangenteil des Seitenschenkelabschnitts (34) der Schieberhohlstange (30) aufweist, wobei das Kopplungselement innerhalb der hohlen Gelenkteile (104,106) und außen um die Sperreinheit (110,112,118) herum verläuft.

8. Betätigungseinheit nach einem der Ansprüche 1 bis 7, **dadurch gekennzeichnet, dass** das Kopplungselement als Gestänge oder als Bowdenzug (40) mit einer inneren Seele (46) und einer druckfesten sowie flexiblen äußeren Führungshülse (42) ausgebildet ist, deren eines axiales Ende an bzw. in dem Gehäuse (50) und dessen anderes axiales Ende an bzw. in der Kinderwagen-Bremsvorrichtung gehalten ist.

## Claims

1. Actuation unit for a stroller braking device, comprising
- a housing (50) with an upper housing part (52) and a lower housing part (54),
- an actuation handle (39) arranged between the upper housing part (52) and the lower housing part (54), the handle being supported in the housing (50) for pivoting around a pivot axis and comprising a receptacle to which a coupling element can be fastened for operative connection of the actuation handle (39) with the stroller braking device,
- wherein the actuation handle (39), starting from an intermediate position, is pivotable in a first direction (74) to a first pivotal position to generate a braking function of the stroller brake device and, also starting from an intermediate position, is pivotable in a second direction (76) opposite to the first direction to a second pivotal position to generate a locking function of the stroller brake device, and
- a releasable locking device (80) for automatically locking the actuation handle (39) in the second pivotal position,
**characterized in**
- **that** the locking device (80) comprises a release button (78) arranged for axial displacement on a pin (56) coaxial with the pivot axis and at least one locking projection (94) for dipping into a corresponding locking recess (98) of the actuation handle (39), the projection being coupled with the release button (78),
- **that** the locking device (80) is provided with a preloading element (82) for exerting a preloading force on the locking projection (94) in the direction of the actuation handle (39) for a automatic dipping of the locking projection (94) into the locking recess (98) when the actuation handle (39) is in its second pivotal position, and
- **that**, in the second pivotal position of the actuation handle (39) and thus with the locking projection (94) dipped into the locking recess (98), the release button (78) assumes a release position in which the release button (78) projects in part from the housing (50) and, for releasing the locking device (80), the button is manually retractable into the housing (50) against the preloading force up to a retracted position and remains in the retracted position in other pivotal positions of the actuation handle (39).

2. Actuation unit of claim 1, **characterized in that** the release button (78) and the at least one locking projection (94) are formed as a single piece.

3. Actuation unit of claim 2, **characterized in that** the locking device (80) has at least two locking projections (94) and the actuation handle (39) has at least two locking recesses (98) respectively assigned to these locking projections (94).

4. Actuation unit of one of claims 1 to 3, **characterized by** an actuation handle return device (102) with at least one return spring element for an automatic retraction of the actuation handle (39) to the intermediate position.

5. Actuation unit of one of claims 1 to 4, **characterized in that** the housing (50) has an enclosing section (99) and that a substantially U-shaped hollow handle bar (30) is provided which, in an enclosing region (101) is enclosed and/or surrounded by the housing (50) or the enclosing section (99) thereof and comprises an opening (97) in the enclosing region (101) for passing the coupling element therethrough, the element establishing the operative connection between the actuation handle (39) and the stroller brake device.

6. Actuation unit of claim 5, **characterized in that** the substantially U-shaped hollow handle bar (30) has a base leg section (32) and two substantially parallel lateral leg sections (34) directed in the same direction and each having a hinge (36) for angling the ends of the lateral leg sections (34), and that the coupling element extends through at least one of the lateral leg sections (34) and the hinge (36) thereof.

7. Actuation unit of claim 6, **characterized in that** each hinge (36) has two hollow hinge parts (104, 106) with a hinge axis (108), a locking unit (110, 112, 118) arranged concentrically thereto, a release element (122) deactivating the same, and with a preloading spring (124) for automatically activating the locking unit (110, 112, 118), and that each hinge part (104, 106) has a hollow connecting stub (107) for connection with a hollow rod part of the lateral leg section (34) of the hollow handle bar (30), wherein the coupling element extends inside the hollow hinge parts (104, 106) and on the outside around the locking unit (110, 112, 118).

8. Actuation unit of one of claims 1 to 7, **characterized in that** the coupling element is designed as a linkage or a Bowden cable (40) with an inner core (46) and a pressure-resistant and flexible outer guide sleeve (42), one axial end of which is held on or in the housing (50) and the other axial end thereof is held on or in the stroller brake device.

## Revendications

1. Unité de commande destinée à un dispositif de freinage d'un landau, avec
- un boîtier (50) qui comprend une partie supérieure de boîtier (52) et une partie inférieure de boîtier (54),
- une poignée d'actionnement (39) disposée entre la partie supérieure de boîtier (52) et la partie inférieure de boîtier (54), qui est monté dans le boîtier (50) d'une manière pivotante autour d'un axe de pivotement et qui comprend un logement dans lequel un élément d'accouplement pour une liaison effective entre la poignée d'actionnement (39) et le dispositif de freinage du landau peut être fixé,
- la poignée d'actionnement (39) pouvant être pivotée, à partir d'une position centrale, dans une première direction (74) jusqu'à une première position de pivotement pour produire une fonction de freinage du dispositif de freinage du landau et, également à partir de la position centrale, dans une seconde direction (76), opposée à la première direction, jusqu'à une seconde position de pivotement pour produire une fonction d'arrêt du dispositif de freinage du landau, et
- un dispositif d'arrêt (80) apte à être débloqué, pour un arrêt automatique de la poignée d'actionnement (39) dans la seconde position de pivotement,
**caractérisée en ce que**
- le dispositif d'arrêt (80) comprend un bouton de déblocage (78) qui est disposé de manière axialement coulissante sur un tenon (56) coaxial par rapport à l'axe de pivotement, et au moins une saillie d'arrêt (94) accouplée au bouton de déblocage (78), destinée à plonger dans un creux d'arrêt (98) correspondant de la poignée d'actionnement (39),
- que le dispositif d'arrêt (80) est pourvu d'un élément de précontrainte (82) destiné à exercer une force de précontrainte sur la saillie d'arrêt (94) en direction de la poignée d'actionnement (39) pour une plongée automatique de la saillie d'arrêt (94) dans le creux d'arrêt (98), lorsque la poignée d'actionnement (39) se trouve dans sa seconde position de pivotement, et
- que le bouton de déblocage (78) prend, dans la seconde position de pivotement de la poignée d'actionnement (39) et ainsi lorsque la saillie d'arrêt (94) est plongée dans le creux d'arrêt (98), une position de sortie dans laquelle le bouton de déblocage (78) ressort partiellement du boîtier (50), et est apte à être retourné manuellement, pour le déblocage du dispositif d'arrêt (80), à l'encontre de la force de précontrainte, dans le boîtier (50) jusque dans une position de retrait et reste dans la position de retrait pour les autres positions de pivotement de la poignée d'actionnement (39).

2. Unité de commande selon la revendication 1, **caractérisée en ce que** le bouton de déblocage (78) et ladite au moins une saillie d'arrêt (94) sont formés en une seule pièce.

3. Unité de commande selon la revendication 2, **caractérisée en ce que** le dispositif d'arrêt (80) comprend au moins deux saillies d'arrêt (94) et la poignée d'actionnement (39) comprend au moins deux creux d'arrêt (98) respectivement associés auxdites saillies d'arrêt (94).

4. Unité de commande selon l'une des revendications 1 à 3, **caractérisée par** un dispositif de rappel (102) de la poignée d'actionnement avec au moins un élément élastique de rappel pour un mouvement en retour automatique de la poignée d'actionnement (39) dans la position centrale.

5. Unité de commande selon l'une des revendications 1 à 4, **caractérisée en ce que** le boîtier (50) comprend une partie apte à être entourée (99) et **en ce qu'**il est prévu une tige creuse de poussoir (30) de forme sensiblement en U qui est enfermée ou entourée, dans une zone apte à être entourée (101), par le boîtier (50) et sa partie apte à être entourée (99) et comprend, à l'intérieur de la zone apte à être entourée (101), une ouverture (97) pour le passage de l'élément d'accouplement établissant une liaison effective entre la poignée d'actionnement (39) et le dispositif de freinage du landau.

6. Unité de commande selon la revendication 5, **caractérisée en ce que** la tige creuse de poussoir (30) de forme sensiblement en U comprend une partie de branche de base (32) et deux parties de branche latérales (34) essentiellement parallèles et orientées dans la même direction, avec une articulation respective (36) pour un pivotement des extrémités des parties de branche latérales (34) et **en ce que** l'élément d'accouplement s'étend à travers au moins une des parties de branche latérales (34) et l'articulation (36) de celle-ci.

7. Unité de commande selon la revendication 6, **caractérisée en ce que** chaque articulation (36) comprend deux parties d'articulation creuses (104, 106) avec un axe d'articulation (108), une unité de blocage (110, 112, 118) disposée de manière concentrique par rapport à ce dernier, un élément de déblocage (122) désactivant celle-ci et avec un ressort de précontrainte (124) pour activer, de manière automatique, l'unité de blocage (110, 112, 118), et **en ce que** chaque partie d'articulation (104, 106) comprend un embout de connexion creux (107) pour la connexion avec une partie de tige creuse de la partie de branche latérale (34) de la tige creuse de poussoir (30), l'élément d'accouplement s'étendant à l'intérieur des parties d'articulation creuses (104, 106) et à l'extérieur autour de l'unité de blocage (110, 112, 118).

8. Unité de commande selon l'une des revendications 1 à 7, **caractérisée en ce que** l'élément d'accouplement est conformé comme tringlerie ou comme câble de type « Bowden » (40) avec une âme intérieure (46) et un manchon extérieur de guidage (42) résistant à la pression et flexible, dont l'une extrémité axiale est maintenue sur ou dans le boîtier (50) et dont l'autre extrémité axiale est maintenue sur ou dans le dispositif de freinage du landau.
